# EUROPÄISCHE PATENTSCHRIFT

(11) **EP 0 639 675 B1**
(45) Veröffentlichungstag und Bekanntmachung des Hinweises auf die Patenterteilung: **24.09.1997**
(21) Anmeldenummer: 94111682.4
(22) Anmeldetag: 27.07.1994
(51) Int. Cl.: E03C 1/10, F16K 15/14

(54) **Rückflussverhinderer**
Backflow prevention valve
Clapet anti-retour

(30) Priorität: 17.08.1993 CH 2447/93
(43) Veröffentlichungstag der Anmeldung: 22.02.1995
(73) Patentinhaber: KWC AG, CH-5726 Unterkulm (CH)
(72) Erfinder: Hochstrasser, Ferdinand, CH-5105 Auenstein (CH)
(74) Vertreter: Patentanwälte Schaad, Balass, Menzl & Partner AG

(56) Entgegenhaltungen:
- EP-A- 0 447 777
- CH-A- 344 598
- US-A- 2 270 737
- US-A- 2 382 427
- US-A- 2 675 823

## Beschreibung

Die vorliegende Patentanmeldung betrifft einen Rückflussverhinderer für sanitäre Einrichtungen, insbesondere Sanitärarmaturen.

Rückflussverhinderer oder Rückschlagventile werden in sanitären Einrichtungen verwendet, um das Zurückströmen von Wasser in eine Speiseleitung zu verhindern, wenn in dieser beispielsweise infolge Rohrbruch Unterdruck herrscht. Insbesondere bei Sanitärarmaturen mit Schlauchbrausen besteht dabei die Gefahr, dass Schmutzwasser in die Speiseleitung zurückgesaugt wird, wenn bei geöffneter Steuerpatrone der Armatur der Brausekopf in das Schmutzwasser eingetaucht ist.

Meist werden im Sanitärbereich allgemein bekannte Tellerventile als Rückflussverhinderer verwendet. Ein Ventilteller wird dabei mittels einer Feder gegen einen Ventilsitz gedrückt, so dass sie auch bei sehr kleinen Rückströmdrücken dicht schliessen. Infolge der axialen Bewegung der Ventilteller entsteht mit der Zeit Abrieb an den Führungen, was zur Folge haben kann, dass die Tellerventile nicht mehr abdichten. Ein weiteres Problem bei Tellerventilen besteht darin, dass bei Eindringen von Fremdkörpern die Leckage erheblich sein kann; beispielsweise kann beim Einklemmen eines Sandkorns zwischen dem Ventilteller und den Ventilsitz ein erheblicher Strömungsquerschnitt frei bleiben.

Auch Kugelventile werden als Rückflussverhinderer verwendet. Diese mit wenig Kosten herstellbaren Ventile leiden unter praktisch keiner Abnützung und sind mit leichten Kugeln reaktionsschnell. Bei Störung durch Fremdkörper treten aber die gleichen Probleme wie bei Tellerventilen auf. Da die Kugeln nicht federbelastet sind, weisen sie aber bei kleinen Rückströmdrücken labiles Verhalten auf.

Weiter ist auch die Verwendung von Entenschnabel-Ventilen bekannt. Diese weisen einen becherförmigen oder hohlen keilförmigen Ventilkörper aus gummielastischem Material auf, der in einem Gehäuse gehalten ist. Die keilförmigen Ventilkörper weisen am zugespitzten Ende einen geraden Schlitz auf, der das Innere des Ventilkörpers mit der Umgebung verbindet. Die den Schlitz begrenzende Wand des Ventilkörpers bildet somit Dichtlippen. Die becherartigen Ventilkörper weisen im Bereich des Bodens einen geradlinigen Schlitz auf, der durch gegen aussen vorstehende, am Boden angeformte Dichtlippen begrenzt ist. Herrscht im Innenraum der Ventilkörper Ueberdruck, öffnen sich die Schlitze und das Wasser kann durch diese ausströmen. Herrscht allerdings im Innenraum Unterdruck, werden die Dichtlippen durch den höheren Umgebungsdruck gegeneinander gepresst und ein Rückströmen verhindert. Diese Ventile weisen bei kleinen Herstellungskosten praktisch keine Abnützung auf und haben immer noch ein verhältnismässig gutes Schliessverhalten bei in den Schlitz eingedrungenen Fremdkörpern, da sich die dünnen Dichtlippen an diese anschmiegen. Nachteilig ist aber, dass sich die Dichtlippen erst bei einem relativ grossen Rückstaudruck vollständig aneinander anlegen, sie zeigen deshalb bei sehr kleinen Rückstaudrücken ein labiles Verhalten.

Aus den US-Patentschriften Nr. 2,270,737 und 2,382,427 sind Rückflusssicherungen bekannt, die ein Rücksaugen von Wasser aus Toilettenschüsseln in die Speiseleitung dadurch verhindern, dass bei speisewasserleitungsseitigem Unterdruck gleichzeitig die Spülleitung belüftet und das Zurücksaugen von Wasser durch einen rückschlagventilartigen Teil verhindert wird. In den Durchlass eines rohrartigen Gehäuses ist eine Aussenmanschette eingesetzt, die mit ihrem einlassseitigen Endbereich am Gehäuse befestigt und über einen Innenflansch radial abgestützt ist. Bezüglich dem Innenflansch stromabwärts weist die Aussenmanschette einen mittleren zylindrischen Abschnitt auf, an dem ein sich aufweitender Endabschnitt anschliesst. Im Bereich des Mittelabschnittes ist das Gehäuse mit radialen Durchlässen versehen, die mit der Umgebungsluft verbunden sind. Stromabwärts dieser Durchlässe weist das Gehäuse einen weiteren Innenflansch auf, der zusammen mit der Aussenmanschette einen ringförmigen Belüftungsspalt begrenzt und dessen den Durchlässen abgewandte Stirnseite konusartig ausgebildet ist. Eine glockenartige Innenmanschette befindet sich innerhalb der Aussenmanschette und liegt mit ihrem freien Endbereich vom freien Ende der Aussenmanschette beabstandet, an deren Endabschnitt an. Bei durchströmendem Wasser dehnt sich die Aussenmanschette aus und legt sich mit ihrem Endabschnitt an die Stirnseite des weiteren Innenflansches an, um den Lüftungsspalt zu schliessen. Dadurch wird der Austritt von Wasser durch die Durchlässe verhindert. Unter dem Druck des Wassers biegt sich die Innenmanschette unter Bildung von Falten einwärts. Bei speiseseitigem Unterdruck wird die Aussenmanschette einwärts gebogen, so dass sich ihr Endabschnitt an der Innenmanschette satt anlegt, um das Zurückströmen von Wasser zu verhindern. Gleichzeitig ist der Lüftungsspalt frei, um den Auslass zu belüften. Da dünnwandige glockenartige Manschetten beim nach Einwärtsbiegen zwangsweise wellenartige Falten oder Knicke bilden, ist ein nachfolgendes sauberes Anlegen an der Aussenmanschette nur gewährleistet, wenn deren innere Mantelfläche des Endabschnitts entsprechend der damit zusammenwirkenden Aussenkontur der Innenmanschette angepasst ist. Mit anderen Worten darf die Aussenmanschette ohne oder nur mit äusserst geringer Vorspannung an der Innenmanschette anliegen. Dies kann dazu führen, dass bei geringen Rückströmdrücken ein sauberes Schliessen des Ventils nicht mehr gewährleistet ist.

Es ist eine Aufgabe der vorliegenden Erfindung einen Rückflussverhinderer zu schaffen, der ein sicheres Funktionieren auch bei kleinen Rückströmdrücken und gute Dichteigenschaften bei Störung durch Fremdkörper aufweist.

Diese Aufgabe wird durch einen Rückflussverhinderer gelöst, der die Merkmale des Anspruchs 1 aufweist.

Da die Aussenmanschette mit einem Stützabschnitt der Innenmanschette zusammenwirkt, der derart geformt und dimensioniert ist, dass er durch das strömende Wasser nicht Falten bildet und eine wellenartige oder geknickte Form annimmt, kann die Aussenmanschette unter erheblicher Vorspannung an der Innenmanschette anliegen, ohne dass Gefahr besteht, dass zwischen den Manschetten Hohlräume vorhanden sind. Weiter wird dadurch das Zurückströmen von Wasser sicher verhindert. Die dichtlippenartige Ausbildung der freien Endbereiche der Aussen- und Innenmanschette erlaubt ein gutes Anschmiegen an evtl. Fremdkörper. Die Leckrate ist somit selbst bei zwischen der Aussen- und der Innenmanschette eingeklemmten Fremdkörpern auf ein Minimum reduziert. Da die Aussenmanschette beim freien Ende der Innenmanschette endet, ist die Gefahr beseitigt, dass bei einer auf der Auslassseite auf die Manschetten auflaufende Wassersäule eine der Dichtlippen sich von der anderen abhebt.

Eine besonders einfache Ausbildungsform des erfindungsgemässen Rückflussverhinderers ist im Anspruch 2 angegeben.

Bei einer weiteren bevorzugten Ausbildungsform gemäss Anspruch 3 tritt der Gefahr entgegen, dass von der Auslassseite her einströmendes Wasser die dehnbare Aussenmanschette von der Innenmanschette abhebt.

Weitere besonders bevorzugte Ausbildungsformen des erfindungsgemässen Rückflussverhinderers, die wenige Teile aufweisen, sind in den Ansprüchen 4 und 5 definiert.

Bei der ebenfalls bevorzugten Ausbildungsform gemäss Anspruch 6 kann der Stützabschnitt dem strömenden Wasser elastisch ausweichen, um den Strömungsquerschnitt freizugeben. Gleichzeitig wird bei auslassseitigem Ueberdruck der Stütz- und Dichtlippenabschnitt gegen die Aussenmanschette gedrückt.

Bei einem zum Einbau in eine Sanitärarmatur bestimmten Rückflussverhinderer ist das Dichten und Zentrieren bei einer Ausbildungsform gemäss den Ansprüchen 7 und 8 auf besonders einfache Art und Weise gewährleistet.

Die Ansprüche 9 und 10 beziehen sich auf eine bevorzugte Ausführungsform zur sicheren Fixierung der Innenmanschette am Tragkörper. Diese Ausführungsform ergibt einen festen und unverrückbaren Sitz der Innenmanschette, insbesondere in Sperrrichtung.

Die vorliegende Erfindung wird nun anhand von zwei in der Zeichnung dargestellten Ausführungsbeispielen näher erläutert. Es zeigen rein schematisch:
- Fig. 1: in einem Längsschnitt eine erste Ausbildungsform des erfindungsgemässen Rückflussverhinderers;
- Fig. 2 und 3: in einem Längsschnitt bzw. in Draufsicht eine zweite Ausbildungsform des erfindungsgemässen Rückflussverhinderers; und
- Fig. 4: in einem Längsschnitt eine dritte Ausbildungsform des erfindungsgemässen Rückflussverhinderers.

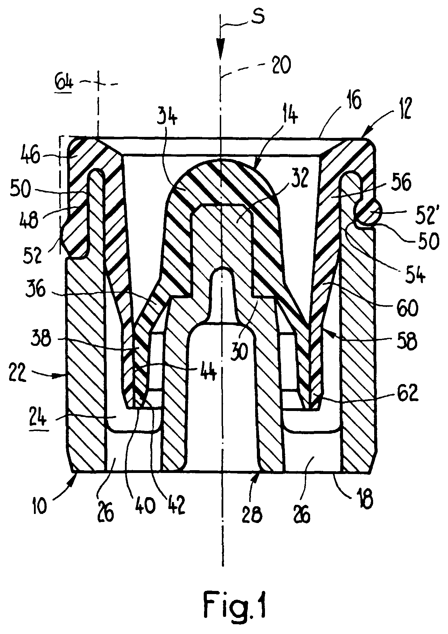

Der in der Fig. 1 gezeigte Rückflussverhinderer (Rückschlagventil) ist besonders einfach im Aufbau und weist nur drei Teile auf: Ein Gehäuse 10 vorzugsweise aus Kunststoff, eine Aussenmanschette 12 und eine Innenmanschette 14, beide aus gummielastischem Material. Die Einlassseite des Rückflussverhinderers ist mit 16 und die Auslassseite mit 18 bezeichnet. Der Pfeil S gibt die Strömungsrichtung des Wassers an.

Von einem zur Achse 20 rotationssymmetrischen rohrartigen Gehäuseteil 22 stehen in dem von ihm begrenzten Durchlass 24 vorstehende Rippen 26 ab, die einen zur Achse 20 ebenfalls rotationssymmetrischen Tragkörper 28 halten. Beim den Gehäuseteil 22, die Rippen 26 und den Tragkörper 28 aufweisenden Gehäuse 10 handelt es sich um ein einstückiges Spritzgussteil.

Der schaftartig geformte Tragkörper 28 steht von den auf der Auslassseite 18 des Rückflussverhinderers angeordneten Rippen 26 in Richtung gegen die Einlassseite 16 ab und weist eine stufenartige Verjüngung 30 auf, so dass das freie Ende einen Stummel 32 bildet, auf dem die Innenmanschette 14 mit ihrem hutartigen Befestigungsabschnitt 34 sitzt. Der Durchmesser des Stummels 32 ist grösser als die entsprechende Ausnehmung in der Innenmanschette 14, so dass diese infolge ihrer Elastizität unter hohem Kraftschluss am Stummel 32 anliegt. Es ist selbstverständlich auch eine formschlüssige Befestigung, beispielsweise mittels Nuten und Wülsten, denkbar.

An den Befestigungsabschnitt 34 schliesst ein sich in Strömungsrichtung S gesehen konisch erweiternder Mittelabschnitt 36 an, an dem ein zylinderförmiger Stützabschnitt 38 anschliesst, an welchen seinerseits ein bis zum freien Ende 40 sich erstreckender Dichtlippenabschnitt 42 anschliesst. Die Wanddicke der Innenmanschette 14 ist im Bereich des Mittelabschnitts 36 und Stützabschnitts 38 in etwa gleich gross und derart gewählt, dass der Stützabschnitt 38 infolge des in sanitären Anlagen üblichen Wasserdrucks nicht in Richtung gegen die Achse 20 hin einknicken bzw. einfalten kann. Der knickartige Uebergang vom konischen Mittelabschnitt 36 in den Stützabschnitt 38 führt zu einer Versteifung der Innenmanschette 14 und unterstützt die Faltfestigkeit.

Im Bereich des Dichtlippenabschnittes 42 verjüngt sich, in Strömungsrichtung S gesehen, die Wandstärke der Innenmanschette 14, so dass eine weiche Dichtlippe gebildet wird. Die dem Stützabschnitt 38 und Dichtlippenabschnitt 42 gemeinsame zylinderförmige äussere Mantelfläche ist mit 44 bezeichnet. Im weiteren sei der Vollständigkeit halber bemerkt, dass zwischen dem Tragkörper 28 und der Innenmanschette 14 im Bereich des Mittelabschnitts 36, des Stützabschnitts 38 und des Dichtlippenabschnitts 42 ein Freiraum vorhanden ist.

Die Aussenmanschette 12 ist auf der Einlassseite 16 krempenartig ausgebildet und umfasst mit seiner Krempe 46 das diesseitige Ende des Gehäuseteils 22 und greift mit seinem aussenliegenden Krempenrandabschnitt 48 in eine Umfangsausnehmung 50 des Gehäuseteils 22 ein, die sich bis zum diesseitigen Ende des Gehäuseteils 22 erstreckt. In der Fig. 1 links der Achse 20 und rechts der Achse 20 sind zwei unterschiedliche Ausbildungsformen der Umfangsausnehmung 50 und des entsprechend geformten Krempenrandabschnitts 48 gezeigt. Bei der links gezeigten Ausbildungsform ist der Boden der Umfangsausnehmung 50 im wesentlichen zylinderförmig ausgebildet und der Krempenrandabschnitt 48 weist im Endbereich eine in radialer Richtung über den Gehäuseteil 22 vorstehenden Umfangswulst 52 auf. Bei der rechts gezeigten Ausbildungsform ist die Umfangsausnehmung 50 mit einer Hinterschneidung 54 versehen, in die eine am freien Ende des Krempenrandabschnittes 48 angeformte Verdickung 52' eingreift, die in radialer Richtung gesehen auch über den Gehäuseteil 22 vorsteht.

Die Aussenmanschette 12 liegt mit einem an die Krempe 46 anschliessenden Wurzelbereich 56 an der Innenwand des Gehäuseteils 22 an und geht dann in Strömungsrichtung S gesehen, in einen Manschettenabschnitt 58 über, der vom Gehäuseteil 22 beabstandet ist und dessen Wandstärke in einem Uebergangsbereich 60 abnimmt, dann in etwa bis zu einem dichtlippenartig sich verjüngenden Endabschnitt 62 im wesentlichen konstant bleibt. Die Aussenmanschette 12 liegt unter Vorspannung an der Mantelfläche 44 an. Der Uebergangsbereich 60 endet, in Strömungsrichtung S gesehen, bei der Mantelfläche 44 und der dichtlippenartige Endabschnitt 62 wirkt mit dem Dichtlippenabschnitt 42 der Innenmanschette 14 als Lippendichtung zusammen. Stromabwärts gesehen endet die Aussenmanschette 12 beim freien Ende 40 der Innenmanschette 14.

Der in der Fig. 1 gezeigte Rückflussverhinderer ist dazu bestimmt, in eine zylinderförmige Gehäuseausnehmung 64 einer sanitären Armatur, insbesondere mit einer Schlauchbrause, eingesetzt zu werden. Die Krempe 46 wirkt dabei als Dichtung und der Umfangswulst 52 bzw. die Verdickung 52' dienen zur Zentrierung.

Der in der Fig. 1 gezeigte Rückflussverhinderer funktioniert wie folgt: Fliesst kein Wasser in Strömungsrichtung S, liegt die Aussenmanschette 12 mit Vorspannung an der Innenmanschette 14 an. Der Druck des von in Strömungsrichtung S fliessenden Wassers führt zur Ausdehnung der Aussenmanschette 12 im Bereich des Manschettenabschnitts 58, welcher in radialer Richtung ausweichen kann. Dadurch wird die Aussenmanschette 12 von der im wesentlichen die ursprüngliche Form beibehaltenden Innenmanschette 14 abgehoben, so dass das Wasser durchfliessen und durch die Oeffnungen zwischen den Rippen 26 ausfliessen kann. Wird der Wasserstrom unterbrochen, legt sich die Aussenmanschette 12 infolge ihrer Vorspannung sicher wieder satt an der Mantelfläche 44 der Innenmanschette 14 an. Bei Rückströmdruck, d.h. wenn der einlassseitige Druck kleiner ist als der auslassseitige, werden die Aussen- und die Innenmanschette 12,14 noch stärker aneinandergepresst.

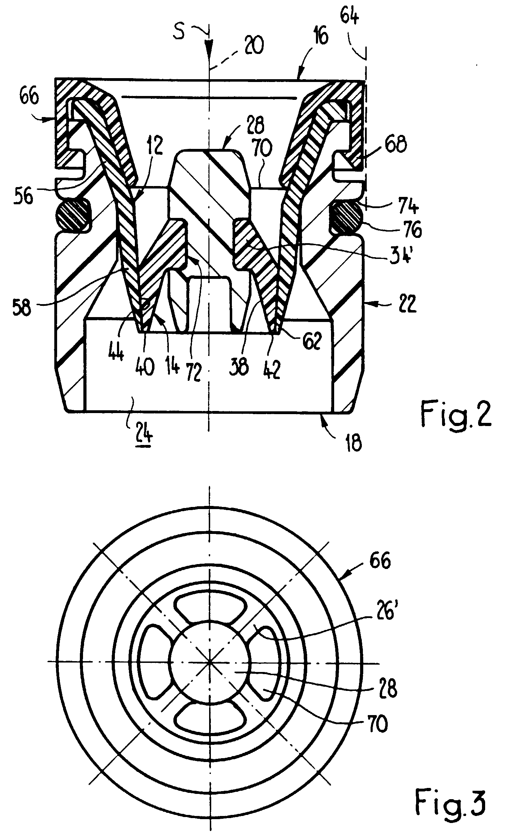

Auch die in den Fig. 2 und 3 gezeigte Ausbildungsform des Rückflussverhinderers weist einen zur Achse 20 rotationssymmetrischen Gehäuseteil 22 auf. Von der Einlassseite 16 her gesehen in Richtung zur Auslassseite 18 wird der vom Gehäuseteil 22 begrenzte Durchlass 24 konisch enger, weist dann im Mittelbereich einen im wesentlichen konstanten Querschnitt auf und ist dann wieder erweitert. Im konisch sich verjüngenden Bereich liegt die Aussenmanschette 12 mit ihrem Wurzelbereich 56 an, welcher auch die einlassseitige Stirnseite des Gehäuseteils 22 überdeckt. Im Wurzelbereich 56 ist die Aussenmanschette 12 zwischen dem Gehäuseteil 22 und einer Befestigungshülse 66 eingeklemmt gehalten, welche über eine Schnappverbindung 68 auf der Aussenseite des Gehäuseteils 22 an diesem befestigt ist.

Stromabwärts gesehen schliesst an den Wurzelbereich 56 ein konischer Manschettenabschnitt 58 an, der bei nicht in Strömungsrichtung S strömendem Wasser vom Gehäuseteil 22 freigestellt ist.

Wie dies insbesondere aus der Fig. 3 erkennbar ist, sind an der Befestigungshülse 66 in Richtung gegen die Achse 20 vorstehende Rippen 26' angeformt, an welchen andererseits ein zur Achse 20 rotationssymmetrischer, im wesentlichen zylinderförmiger Tragkörper 28 angeformt ist. Von den Rippen 26', dem Tragkörper 28 und der Befestigungshülse 66 sind Strömungsdurchlässe 70 begrenzt. In Strömungsrichtung S gesehen, unterhalb der Rippen 26, ist am Tragkörper 28 eine Umfangsnut 72 angeformt, in die die glockenartige Innenmanschette 14 mit ihrem Befestigungsteil 34' eingreift. Vom der Auslassseite 18 zugewandten freien Ende 42 her in Richtung gegen die Einlassseite 16, weist die Innenmanschette 14 eine äussere Mantelfläche 44 auf, an der die Aussenmanschette 12 unter Vorspannung flächig anliegt und die in Strömungsrichtung S gesehen, entsprechend dem mit ihr zusammenwirkenden Abschnitt der Aussenmanschette konisch verjüngend ausgebildet ist. Der faltfest ausgebildete, an den Befestigungsabschnitt 34' anschliessende Stützabschnitt 38 erstreckt sich in axialer Richtung mindestens über einen Teil der Mantelfläche 44. An den Stützabschnitt 38 schliesst zum freien Ende 40 hin der Dichtlippenabschnitt 42 an, der infolge der abnehmenden Wanddicke der Innenmanschette 14 leicht elastisch verformbar ist. Auch die Wandstärke der Aussenmanschette 12 nimmt im Abschnitt mit dem sie an der Innenmanschette 14 anliegt, in Strömungsrichtung S gesehen, kontinuierlich ab, wobei der hochelastische Endabschnitt 62 zusammen mit dem Dichtlippenabschnitt 42 der Innenmanschette 14 eine Lippendichtung bildet.

Weiter weist das Gehäuse eine in radialer Richtung gegen aussen hin offene Nut 74 auf, in der ein Dichtring 76 angeordnet ist, der dazu dient, den in eine strichpunktiert angedeutete Gehäuseausnehmung 64 eingesetzten Rückflussverhinderer zu zentrieren und das Strömen von Wasser zwischen dem Rückflussverhinderer und dem Armaturgehäuse zu verhindern.

Der in den Fig. 2 und 3 gezeigte Rückflussverhinderer funktioniert in gleicher Art und Weise wie die weiter oben beschriebene und in Fig. 1 gezeigte Ausbildungsform. Strömt kein Wasser, liegt die Aussenmanschette 12 mit Vorspannung an der Innenmanschette 14 an. Fliesst nun Wasser in Strömungsrichtung S unter den in sanitären Einrichtungen üblichen Drücken, dehnt sich die Aussenmanschette 12 aus und legt sich an den zylinderförmigen Mittelteil des Gehäuseteils 22 an. Dadurch wird eine Strömungsöffnung zwischen der Aussen- und der Innenmanschette 12,14 freigegeben. Wird der Wasserfluss unterbrochen, legt sich die Aussenmanschette 12 sofort wieder an die Mantelfläche 44 an. Existiert auf der Einlassseite 16 bezüglich der Auslassseite 18 Unterdruck, wird ein Rückströmen von Wasser sicher verhindert, da infolge der Faltfestigkeit der Innenmanschette 14 sich die Aussenmanschette 12 infolge ihrer Vorspannung vollständig anlegt. Weiter werden unter diesen Druckbedingungen die Aussen- und Innenmanschette 12,14 gegeneinander gepresst.

Auch hier führt die Lippendichtung am auslassseitigen Ende der Aussen- und Innenmanschette 12,14, selbst bei eventuell dazwischen vorhandenen Fremdkörpern, zu einem guten Dichtverhalten, da sich der Dichtlippenabschnitt 42 und der Endabschnitt 62 an diesen anlegen. Infolge der Vorspannung der Aussenmanschette 12 ist selbst dann eine sehr geringe Leckrate garantiert, falls ein länglicher Fremdkörper entlang der gesamten Mantelfläche 44 sich erstrecken sollte.

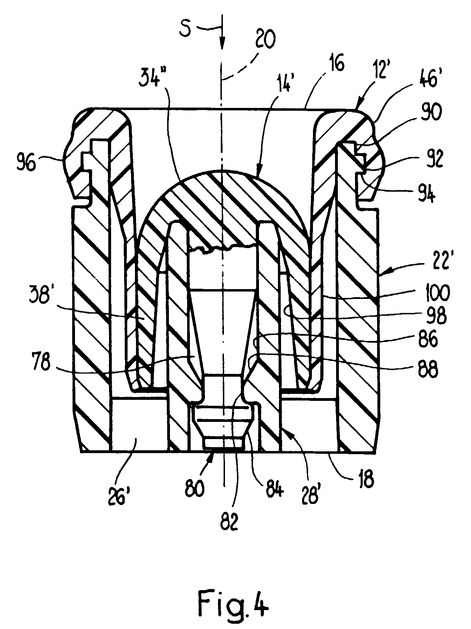

Die in der Fig. 4 dargestellte weitere Ausführungsform eines Rückflussverhinderers unterscheidet sich von derjenigen in der Fig. 1 insbesondere durch die Befestigung der Innenmanschette 14' am rotationssymmetrischen Tragkörper 28', aber auch durch die Befestigung der Aussenmanschette 12' am rohrartigen Gehäuseteil 22'.

Im Unterschied zum Tragkörper 28 in Fig. 1 weist der gemäss Fig. 4 ebenfalls durch Rippen 26' mit dem rohrartigen Gehäuseteil 22' verbundene Tragkörper 28' in seinem Zentrum eine sich in axialer Richtung 20 erstreckende Öffnung 78 auf. In dieser Öffnung 78 ist die aus einem gummielastischen Werkstoff bestehende Innenmanschette 14' mittels eines einteilig angeformten, sich in Richtung zum Auslassende 18 erstreckenden Zapfens 80 knopfartig befestigt.

Zur Fixierung weisen die Öffnung 78 einen Engpass 82 und der Zapfen 80 an seinem Ende einen Abschnitt 84 auf, dessen Aussendurchmesser grösser ist, als der Innendurchmesser des Engpasses 82. Der Zapfen 80 wird mit seinem Abschnitt 84 durch den Engpass 82 hindurchgesteckt, wobei der Abschnitt 84 des Zapfens zusammengedrückt wird, um nach dem Passieren des Engpasses 82 seine ursprüngliche Form wieder anzunehmen.

Zum erleichterten Einstecken weist die Öffnung 78 zwischen einem zylindrischen Bereich 86 und dem Engpass 82 einen sich in Richtung zum Auslassende 18 erweiternden konischen Bereich 88 auf.

Zur besseren Erkennbarkeit ist der Zapfen 80 voll dargestellt, während der übrige Teil der Innenmanschette 14' im Längsschnitt gezeigt ist.

Bei der Innenmanschette 14' schliesst sich an einen etwa halbkugelförmigen hutartigen Befestigungsabschnitt 34'' unmittelbar ein zylindrischer Stützabschnitt 38' glockenförmig an.

Die Aussenmanschette 12' in Fig. 4 ist mittels einer Krempe 46' an einem Randabschnitt 90 des rohrartigen Gehäuseteils 22' befestigt. Zur Arretierung weist der Randabschnitt 90 auf seiner Aussenseite einen umlaufenden Steg 92 auf, der in eine Ringnut 94 der Krempe 46' eingreift.

Im Bereich der Ringnut 94 weist die Krempe 46' auf ihrer Aussenseite einen Ringwulst 96 auf, der als Dichtung dient, wenn der Rückflussverhinderer in eine zylindrische Gehäuseausnehmung eingesetzt ist, wie eine solche beispielsweise in der Fig. 2 bei 64 angedeutet ist.

Die in der Fig. 4 gezeigte Ausführungsform weist durch die Formgebung der Aussen- und der Innenmanschette 12', 14' der Auslassseite 18 zugekehrt besonders grosse Angriffsflächen auf der Innenseite 98 der Innenmanschette 14' und auf der Aussenseite 100 der Aussenmanschette 12' auf. Dadurch genügt bereits eine geringe Druckdifferenz mit einem höheren Druck auf der Auslassseite 18, um den Rückflussverhinderer gegen einen Rückfluss sicher geschlossen zu halten. Ferner ergibt sich durch diese Formgebung auch eine in Strömungsrichtung gesehen relativ lange Dichtfläche, welche auch dann noch einen sicheren Rückhalt gewährleistet, wenn sich zwischen den aneinandergrenzenden Flächen von Aussen- und Innenmanschette 12', 14' Verunreinigungen befinden.

Im wesentlichen zeichnet sich die Ausführungsform nach Fig. 4 jedoch durch die sichere Verankerung der Aussen- und Innenmanschette 12', 14' am Gehäuseteil 22' bzw. am Tragkörper 28' aus.

## Patentansprüche

1. Rückflussverhinderer für sanitäre Einrichtungen, insbesondere für Sanitärarmaturen, mit einem einen Durchlass (24) aufweisenden Gehäuseteil (22, 22'), einer im Durchlass (24) angeordneten, am Gehäuseteil (22, 22') dicht befestigten Aussenmanschette (12, 12') aus gummielastischem Material, die einen dem Auslassende (18) des Durchlasses (24) zugewandten, frei endenden, Manschettenabschnitt (58) aufweist, der bei vom Einlassende (16) des Durchlasses (24) zum Auslassende (18) durch die Aussenmanschette (12, 12') strömendem Wasser elastisch dehnbar ist, und einer von der Aussenmanschette (12, 12') umgriffenen, gehäusefest angeordneten Innenmanschette (14, 14'), die einen gegenüber dem Druck des Wassers faltfesten Stützabschnitt (38, 38') und einen in Richtung zum Auslassende (18) hin an diesen anschliessenden Dichtlippenabschnitt (42) aufweist, wobei der Manschettenabschnitt (58) der Aussenmanschette (12, 12') unter Vorspannung den Stütz- und den Dichtlippenabschnitt (38, 38', 42) der Innenmanschette (14, 14') umgreift, im mit dem Dichtlippenabschnitt (42) zusammenwirkenden Bereich dichtlippenartig ausgebildet ist und mindestens angenähert beim freien Ende (42) der Innenmanschette (14, 14') endet.

2. Rückflussverhinderer nach Anspruch 1, dadurch gekennzeichnet, dass die Innenmanschette (14, 14') einstückig ausgebildet ist und aus gummielastischem Material besteht.

3. Rückflussverhinderer nach Anspruch 1 oder 2, dadurch gekennzeichnet, dass die mit der Aussenmanschette (12, 12') zusammenwirkende Mantelfläche (44) der Stütz- und Dichtlippenabschnitte (38, 38', 42) zylindrisch oder in Richtung zum Auslassende (18) konisch verjüngend geformt ist.

4. Rückflussverhinderer nach einem der Ansprüche 1 bis 3, dadurch gekennzeichnet, dass vom Gehäuseteil (22, 22'), stromabwärts der Aussenmanschette (12), in den Durchlass (24) vorstehende Rippen (26, 26') abstehen, die einen Tragkörper (28, 28') tragen, an dem die Innenmanschette (14, 14') angeordnet ist.

5. Rückflussverhinderer nach Anspruch 4, dadurch gekennzeichnet, dass die Innenmanschette (14, 14') becherartig ausgebildet ist und den Tragkörper (28, 28') auf der dem Einlass (16) zugewandten Seite überdeckt umgreift.

6. Rückflussverhinderer nach Anspruch 5, dadurch gekennzeichnet, dass zwischen dem Stützabschnitt (38, 38') der Innenmanschette (14, 14') und dem Tragkörper (28, 28') ein Freiraum vorhanden ist.

7. Rückflussverhinderer nach einem der Ansprüche 1 bis 6, dadurch gekennzeichnet, dass die Aussenmanschette (12, 12') im einlassseitigen Endbereich krempenartig geformt ist und das diesseitige Ende des Gehäuseteils (22, 22') überdeckt.

8. Rückflussverhinderer nach Anspruch 7, dadurch gekennzeichnet, dass an der Krempe (46, 46') der Aussenmanschette (12, 12'), auf der Aussenseite des Gehäuseteils (22, 22'), ein umlaufender Wulst (52, 52', 96) angeformt ist.

9. Rückflussverhinderer nach einem der Ansprüche 4 bis 8, dadurch gekennzeichnet, dass der Tragkörper (28') in seinem Zentrum eine sich in axialer Richtung erstreckende Öffnung (78) aufweist, in welcher die aus einem gummielastischen Werkstoff bestehende Innenmanschette (14') mittels eines sich in Richtung zum Auslassende (18) erstreckenden, angeformten Zapfens (80) befestigt ist.

10. Rückflussverhinderer nach Anspruch 9, dadurch gekennzeichnet, dass die Öffnung (78) im Tragkörper (28') einen Engpass (82) aufweist, dass der Zapfen (80) der Innenmanschette (14') an seinem äusseren Ende einen Abschnitt (84) aufweist, dessen Aussendurchmesser grösser ist als der Innendurchmesser des Engpasses (82) und dass dieser Abschnitt (84) knopfartig durch den Engpass (82) hindurchgeführt ist.

## Claims

1. Backflow-preventer for sanitary devices, especially for sanitary fittings, having a housing part (22, 22') exhibiting a conduit (24), having an outer sleeve (12, 12'), made from elastomeric material, which is disposed in the conduit (24) and is fastened sealtight to the housing part (22, 22') and exhibits a free-ending sleeve section (58), facing the outlet end (18) of the conduit (24), which sleeve section, whenever water flows through the outer sleeve (12, 12') from the inlet end (16) of the conduit (24) to the outlet end (18), is elastically expandable, and having an inner sleeve (14, 14'), which is embraced by the outer sleeve (12, 12') and is disposed fixed to the housing and which exhibits a supporting section (38, 38'), which is fold-resistant to the pressure of the water, and a sealing lip section (42), which adjoins said supporting section in the direction of the outlet end (18), the sleeve section (58) of the outer sleeve (12, 12') embracing, under pretensioning, the supporting and sealing lip sections (38, 38', 42) of the inner sleeve (14, 14'), being configured like a sealing lip in the region interacting with the sealing lip section (42) and ending at least approximately beside the free end (42) of the inner sleeve (14, 14').

2. Backflow-preventer according to Claim 1, characterized in that the inner sleeve (14, 14') is configured in one piece and consists of elastomeric material.

3. Backflow-preventer according to Claim 1 or 2, characterized in that the contacting surface (44) of the supporting and sealing lip sections (38, 38', 42), which contacting surface interacts with the outer sleeve (12, 12'), is shaped cylindrically or conically tapered in the direction of the outlet end (18).

4. Backflow-preventer according to one of Claims 1 to 3, characterized in that protruding from the housing part (22, 22'), downstream from the outer sleeve (12), there are ribs (26, 26'), which project into the conduit (24) and bear a bearing element (28, 28') on which there is disposed the inner sleeve (14, 14').

5. Backflow-preventer according to Claim 4, characterized in that the inner sleeve (14, 14') is configured like a cup and embraces the bearing element (28, 28') such that it is covered on the side facing the inlet (16).

6. Backflow-preventer according to Claim 5, characterized in that between the supporting section (38, 38') of the inner sleeve (14, 14') and the bearing element (28, 28') there is a free space present.

7. Backflow-preventer according to one of Claims 1 to 6, characterized in that the outer sleeve (12, 12') is shaped, in the end region on the inlet side, like a rim flange and covers the near-sided end of the housing part (22, 22').

8. Backflow-preventer according to Claim 7, characterized in that formed onto the rim flange (46, 46') of the outer sleeve (12, 12'), on the outer side of the housing part (22, 22'), there is a circumferential bead (52, 52', 96).

9. Backflow-preventer according to one of Claims 4 to 8, characterized in that the bearing element (28') exhibits in its centre an opening (78) extending in the axial direction, in which opening the inner sleeve (14'), consisting of an elastomeric material, is fastened by means of a journal (80), which is formed on and extends in the direction of the outlet end (18).

10. Backflow-preventer according to Claim 9, characterized in that the opening (78) in the bearing element (28') exhibits a bottleneck (82), in that the journal (80) of the inner sleeve (14') exhibits at its outer end a section (84), the outside diameter of which is larger than the inside diameter of the bottleneck (82), and in that this section (84) is guided in button-like fashion through the bottleneck (82).

## Revendications

1. Clapet anti-retour pour installations sanitaires, notamment pour robinetteries sanitaires, avec un boîtier (22, 22') présentant un passage (24), une manchette extérieure (12, 12') en matière caoutchouc élastique disposée dans le passage (24) et fixée hermétiquement sur le boîtier (22, 22'), lequel présente une section de manchette (58) faisant face à l'extrémité de sortie (18) du passage (24) et se terminant librement, extensible de manière élastique lorsque de l'eau s'écoule de l'extrémité d'entrée (16) du passage (24) vers l'extrémité de sortie (18) au travers de la manchette extérieure (12, 12'), et une manchette intérieure (14, 14'), enveloppée par la manchette extérieure (12, 12') fixée à demeure sur le boîtier, et présentant une section de support (38, 38') qui ne se plisse pas sous la pression de l'eau et une section en lèvre d'étanchéité (42) en direction de l'extrémité de sortie (18), se raccordant à celle-ci, la section (58) de la manchette extérieure (12, 12') enveloppant la manchette intérieure (14, 14') sous la précontrainte de la section de support et de la section en lèvre (38, 38', 42) par le fait que la zone agissant conjointement avec la section en lèvre d'étanchéité (42) est réalisée sous la forme d'un rebord étanche et se termine au moins à peu près au niveau de l'extrémité libre (42) de la manchette intérieure (14, 14').

2. Clapet anti-retour selon la revendication 1, caractérisé par le fait que la manchette intérieure (14, 14') est réalisée en une seule pièce et qu'elle se compose d'une matière en caoutchouc élastique.

3. Clapet anti-retour selon la revendication 1 ou 2, caractérisé par le fait que la surface d'enveloppe (44) des sections de support et en lèvre d'étanchéité (38, 38', 42), agissant conjointement avec la manchette extérieure (12, 12'), est de forme cylindrique ou conique, effilée en direction de l'extrémité de sortie (18).

4. Clapet anti-retour selon l'une des revendications 1 à 3, caractérisé par le fait que des nervures (26, 26') en saillie dans le passage (24), s'éloignent du boîtier (22, 22') en aval de la manchette extérieure (12), ces nervures présentant un corps de support (28, 28') sur lequel est disposée la manchette intérieure (14, 14').

5. Clapet anti-retour selon la revendication 4, caractérisé par le fait que la manchette intérieure (14, 14') est réalisée sous la forme d'une coupe et entoure, en le recouvrant, le corps (28, 28'), sur le côté faisant face à l'entrée (16).

6. Clapet anti-retour selon la revendication 5, caractérisé par le fait qu'existe un espace libre entre la section de support (38, 38') de la manchette intérieure (14, 14') et le corps (28, 28').

7. Clapet anti-retour selon l'une des revendications 1 à 6, caractérisé par le fait que la manchette extérieure (12, 12') est réalisée sous la forme d'un rebord dans la zone d'extrémité du côté de l'entrée et qu'elle recouvre l'extrémité du boîtier (22, 22') qui se trouve de ce côté.

8. Clapet anti-retour selon la revendication 7, caractérisé par le fait qu'un bourrelet (52, 52', 96), périphérique, est façonné sur le rebord (46, 46') de la manchette extérieure (12, 12'), sur le côté extérieur du boîtier (22, 22').

9. Clapet anti-retour selon l'une des revendications 4 à 8, caractérisé par le fait que le corps de support (28') présente, en son centre, une ouverture (78), s'étendant dans le sens axial, dans laquelle la manchette intérieure (14'), composée d'une matière en caoutchouc élastique, est fixée à l'aide d'un tenon (80), façonné et s'étendant en direction de l'extrémité de sortie (18).

10. Clapet anti-retour selon la revendication 9, caractérisé par le fait que l'ouverture (78) dans le corps de support (28') présente un goulot d'étranglement (82), que le tenon (80) de la manchette intérieure (14') présente à son extrémité extérieure une découpe (84) dont le diamètre externe est supérieur au diamètre interne du goulot d'étranglement (82) et que cette découpe (84) passe au travers du goulot d'étranglement (82) à la manière d'un bouton.
